# DEMANDE DE BREVET EUROPEEN

(11) **EP 1 052 496 A1**
(43) Date de publication de la demande: **15.11.2000**
(21) Numéro de dépôt: 00401009.6
(22) Date de dépôt: 12.04.2000
(51) Int. Cl.: G01M 19/00

(54) **Ensemble pour la caracterisation d'au moins un émetteur et/ou récepteur d'un système de commande à distance pour véhicule automobile**

(30) Priorité: 19.04.1999 FR 9904874
(71) Demandeur: Valeo Electronique, 94042 Créteil (FR)
(72) Inventeur: Triaureau, Pascal, 93170 Bagnolet (FR); Bremond, Philippe, 91120 Bretigny sur Orge (FR); Lesne, Serge, 77176 Savigny le Temple (FR)

(57) **Abrégé**

Ensemble pour caractériser la performance d'au moins un émetteur et/ou récepteur d'un système de commande à distance pour véhicule automobile, caractérisé en ce qu'il comporte un plateau tournant (1) apte à supporter un véhicule (V), des moyens de motorisation pour entraîner ledit plateau (1) en rotation, un ensemble (2) formant rails de guidage destiné à s'étendre jusqu'à proximité dudit plateau (1), un chariot (3) monté coulissant sur ledit ensemble (2) formant rails de guidage, des moyens de motorisation pour entraîner ledit chariot (3) en déplacement le long dudit ensemble formant rails de guidage, un support (10) porté par ledit chariot (3) destiné à recevoir ledit émetteur et/ou récepteur, des moyens de gestion (11) qui synchronisent les mouvements du plateau rotatif et du chariot (3) avec les émissions et/ou réception dudit émetteur et/ou récepteur.

## Description

La présente invention est relative à un ensemble permettant de tester au moins un émetteur et/ou récepteur d'un système de commande à distance pour véhicule automobile, et notamment de déterminer un ou plusieurs paramètres caractéristiques de la performance d'un tel émetteur et/ou d'un tel récepteur.

Généralement, pour caractériser la performance d'un système de commande à émetteur(s)/récepteur(s) pour véhicule automobile - tel qu'un système pour la commande du verrouillage/déverrouillage d'ouvrants d'un véhicule - un opérateur qui porte l'émetteur du système se déplace en une pluralité de positions autour du véhicule et l'émetteur du système est actionné, par exemple manuellement par l'opérateur, à plusieurs distances dudit véhicule. On relève alors pour chaque point d'actionnement, un pourcentage de réception des signaux de télécommande.

Ceci permet de définir des diagrammes de portée sur lesquels sont indiquées différentes zones de réception autour du véhicule, par exemple les zones pour lesquelles le récepteur dans le véhicule reçoit toutes les émissions, celles pour lesquelles il ne reçoit que deux émissions sur trois, celles pour lesquelles il ne reçoit qu'une émission sur trois et enfin celles où il ne reçoit aucune émission.

Toutefois, ce type de test est particulièrement long à mettre en oeuvre.

Et le fait que l'émetteur du système de commande à distance soit déplacé autour du véhicule est source d'erreurs. Notamment, la position de l'opérateur par rapport au véhicule n'est généralement pas connue avec une grande précision.

L'invention propose quant à elle un ensemble permettant de caractériser de façon automatique la performance d'un émetteur et/ou récepteur d'un système de commande pour véhicule automobile, et notamment de déterminer automatiquement la portée d'un émetteur par rapport à un véhicule automobile.

A cet effet, l'invention propose un ensemble pour caractériser la performance d'au moins un émetteur et/ou récepteur d'un système de commande à distance pour véhicule automobile, caractérisé en ce qu'il comporte un plateau tournant apte à supporter un véhicule, des moyens de motorisation pour entraîner ledit plateau en rotation, un ensemble formant rails de guidage destiné à s'étendre jusqu'à proximité dudit plateau un chariot monté coulissant sur ledit ensemble formant rails de guidage, des moyens de motorisation pour entraîner ledit chariot en déplacement le long dudit ensemble formant rails de guidage un support porté par ledit chariot destiné à recevoir ledit émetteur et/ou récepteur, des moyens de gestion qui synchronisent les mouvements du plateau rotatif et du chariot avec les émissions et/ou réception dudit émetteur et/ou récepteur.

Avantageusement, un tel ensemble comporte des moyens pour actionner de façon automatique un émetteur sur ledit support.

Un tel ensemble permet un gain de temps important, puisqu'il permet notamment de tester en moins de quatre heures une télécommande ou un badge ou un système de verrouillage/déverrouillage à transpondeur et de façon plus générale tout émetteur et/ou récepteur de commande à distance pour véhicule automobile.

Il permet des informations particulièrement fiables.

Un tel ensemble est avantageusement modulaire, ce qui le rend facile à monter et à démonter pour le cas échéant le déplacer d'un site à un autre.

Il peut être utilisé à l'extérieur ou sous abri.

Deux opérateurs (voire un seul) suffisent pour le mettre en place et l'utiliser.

D'autres caractéristiques et avantages de l'invention ressortiront encore de la description qui suit.

Cette description est purement illustrative et non limitative.

Elle doit être lue en regard des dessins annexés sur lesquels :
- la figure 1 est une représentation schématique en perspective illustrant le principe d'un ensemble de caractérisation conforme à un mode de réalisation possible de l'invention ;
- la figure 2 est une représentation schématique en vue de côté de l'ensemble de la figure 1 ;
- la figure 3 est une représentation schématique en vue de dessus du même ensemble ;
- les figures 4 et 5 sont des représentations en vue en coupe du chariot et du bâti qu'il porte.

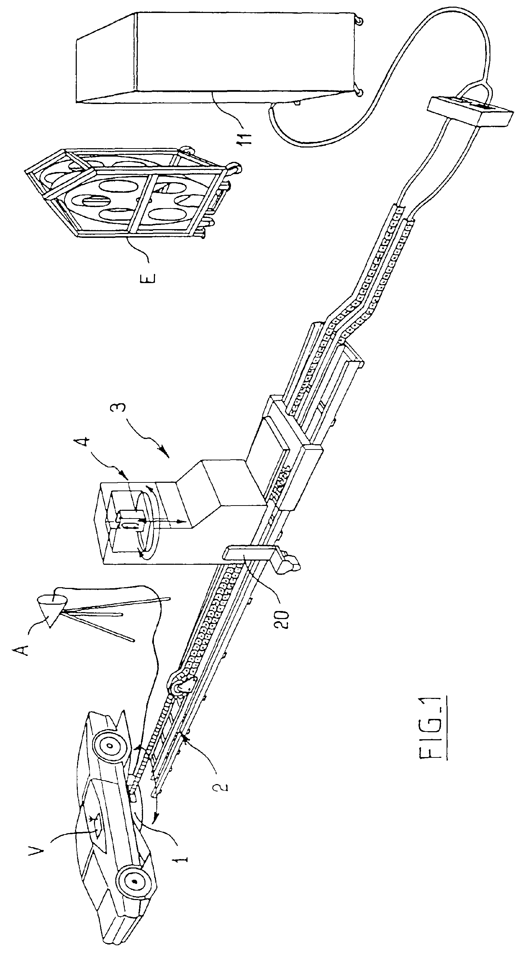

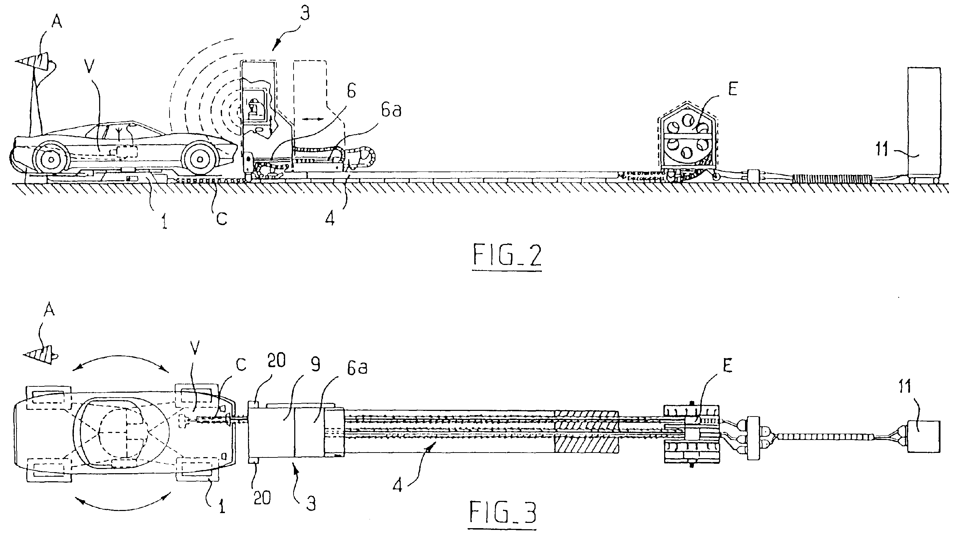

L'ensemble qui est illustré sur les figures 1 à 3 comporte un plateau tournant 1 sur lequel est monté un véhicule V, ainsi qu'un ensemble formant rails de guidage 2 sur lequel se déplace un chariot 3.

Ce chariot 3 porte un bâti sur lequel sont disposés des moyens 4 destinés à recevoir un dispositif tel qu'une télécommande, un badge, etc. et à activer de façon automatique l'émission radiofréquence réalisée par ledit dispositif.

Comme on l'aura compris, ces différents moyens permettent de faire tourner le véhicule sur lui-même tout en rapprochant et éloignant le dispositif émetteur par rapport audit véhicule V. On simule ainsi un opérateur se trouvant en différentes positions relativement au véhicule.

Des antennes de surveillance A peuvent également être prévues sur le site pour permettre de caractériser la pollution radio-fréquence et d'identifier d'éventuels brouilleurs.

Le plateau tournant 1 présente une forme en H. Il est en acier inox recouvert d'une peinture epoxy et est d'une masse de l'ordre de 400 kg.

Il est légèrement surélevé par rapport au sol (de 3 centimètres) de façon à pouvoir tourner par rapport à celui-ci tout en maintenant le véhicule sensiblement au niveau du sol.

Il est entraîné en rotation par des moyens de motorisation de type pas à pas. Ces moyens de motorisation intègrent des moyens de type contacteur tournant qui permettent de piloter avec précision la rotation dudit plateau (résolution inférieure à 1°) tout en autorisant celui-ci à tourner sur lui-même sans limitation.

Ce plateau 1 est porté par six rangées de roulements à billes qui sont disposées concentriquement en son intérieur et qui permettent de répartir le poids du véhicule.

Ces rangées de billes sont elles-mêmes bordées extérieurement par une jupe qui porte une crémaillère externe C sur laquelle engrène un pignon conique.

L'ensemble 2 est constitué d'une pluralité de rails élémentaires qui sont assemblés sur le sol. Cet ensemble s'étend par exemple linéairement sur une longueur de 30 m.

Ces rails élémentaires présentent par exemple chacun une largeur de 0,4 m et une longueur de 2 m, ce qui correspond à un encombrement faible et facilite leur manutention et leur rangement.

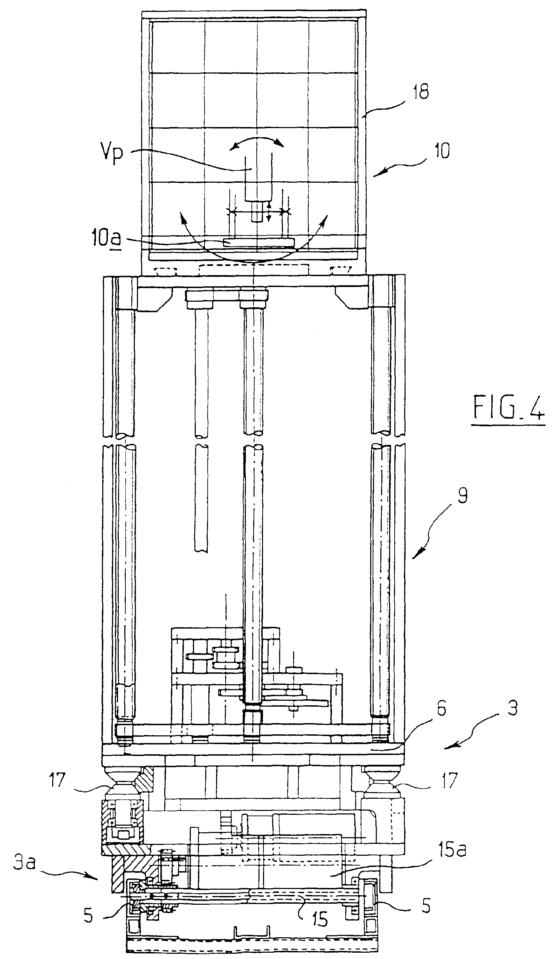

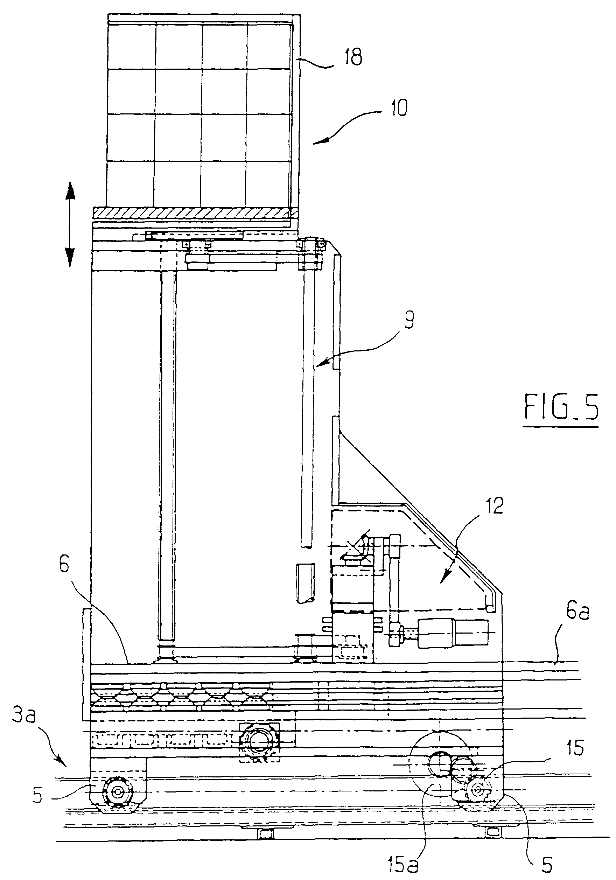

Le chariot 3, plus particulièrement représenté sur les figures 4 et 5, présente un châssis 3a qui est monté coulissant sur les rails de guidage 2.

Il est entraîné en mouvement le long desdits rails 2 par l'intermédiaire d'un pignon 14 qui est monté sur un axe de rotation 15 qui s'étend entre deux galets 5 et qui engrène avec une crémaillère 8 qui s'étend au milieu des deux rails, sur toute la longueur de ceux-ci.

Cet axe de rotation 15 est l'axe à l'arrière du chariot 3 (côté du chariot 3 le plus éloigné du plateau tournant 1).

Le pignon 14 et son axe 15 sont entraînés en rotation par un moteur électrique 15a porté par le châssis 3a.

On notera que le fait que l'entraînement du chariot 3 soit réalisé par l'intermédiaire d'une crémaillère 8 qui est centrée par rapport audit chariot 3 permet d'éviter des problèmes de ripage du chariot 3, qui seraient rencontrés avec des solutions dans lesquelles la crémaillère 8 s'étendrait sur le côté des rails et qui pourraient entraîner le blocage du chariot 3 ou le désemboîtement des galets 5 par rapport aux rails 2.

Le châssis 3a porte un plateau 6 de 0,5 m de largeur et de 1 m de longueur, qui supporte un mât 9 constitué par quatre pieds verticaux.

Sur ce mât 9 est monté un support 10 qui est apte à coulisser le long des pieds verticaux dudit mât 9 (cf. double flèche sur la figure), des moyens de motorisation permettant de commander le déplacement dudit support 10 le long dudit mât 9.

Ce support 10 reçoit des moyens motorisés destinés à porter l'émetteur et/ou récepteur à analyser et à contrôler sa position et son orientation. Ces moyens comportent notamment un plateau tournant 10a, ainsi que des moyens articulés qui sont portés par ledit plateau et qui permettent, avec celui-ci, de régler selon trois degrés de liberté la position et l'orientation dudit émetteur et/ou récepteur.

Dans le cas où l'on teste un émetteur de type télécommande ou analogue, le support 10 reçoit également des moyens non motorisés en matériau composite comportant un vérin pneumatique Vp à air comprimé qui se termine par un doigt dont le déplacement est destiné à actionner le dispositif émetteur. Ledit vérin Vp est du type à deux valves. Sa position et son orientation sont réglées selon trois degrés de liberté avec la position et l'orientation de l'émetteur.

Un compresseur connecté à une unité de gestion 11 (baie informatique représentée sur les figures 1 à 3) distribue l'air comprimé destiné à actionner le vérin Vp.

Le plateau 6 est monté à coulissement sur le châssis 3a et se prolonge, sur sa partie destinée à être la plus éloignée du véhicule V, par une portion 6a qui s'étend au delà du mât 9 du chariot 3.

A cet effet, ledit châssis 3a présente sous ledit plateau 6 deux rangées de galets 17, qui sont tourillonnés autour d'axes verticaux et qui s'étendent latéralement de part et d'autre dudit châssis 3a.

Ces deux rangées latérales de galets 17 définissent des glissières qui coopèrent avec des bordures latérales du plateau 6 pour permettre à celui-ci et au mât 9 qu'il porte de coulisser par rapport au châssis 3a.

Ainsi, lorsque le chariot 3 arrive en fin de course sur les rails de guidage 2, il est encore possible, grâce à ce coulissement, d'avancer le mât 9 et le support 10 qui porte le dispositif émetteur, vers le véhicule.

Ceci permet de ne pas avoir à disposer les rails 2 dans la zone au-dessus de laquelle les bras du plateau en H sont destinés à tourner et par conséquent de limiter la hauteur de garde au sol dudit plateau.

Des bras 20 se terminant par des galets roulants sont prévus de part et d'autre du mât 9 pour assurer la stabilisation dudit mât 9 lorsqu'il est avancé.

Des capteurs sont prévus sur le plateau 6 pour détecter une éventuelle collision dudit plateau avec le véhicule V.

On notera que les différents éléments qui constituent les rails 2, le chariot 3, le mât 9 sont préférentiellement en un matériau amagnétique, de façon à ne pas perturber les émissions RF.

Les différents moteurs électriques, qui interviennent dans la commande de la rotation du plateau 1, dans la commande du déplacement du chariot 3, dans la commande du réglage de la hauteur du support 10 par rapport au mât 9, ainsi que dans la commande de l'orientation du dispositif émetteur sont gérés, avec l'actionnement pneumatique dudit dispositif, par l'unité de gestion 11 indépendante du chariot.

Cette unité 11 de gestion est un calculateur programmé à l'aide du progiciel LABVIEW®.

Elle est reliée par différentes liaisons optiques ou électriques au détecteur du véhicule V, à la motorisation du plateau 1, ainsi qu'à un boîtier d'électronique 12 qui est intégré au chariot 3 et qui commande les moyens pneumatiques et les différents moteurs électriques dudit chariot 3. Le bus entre ladite unité 11 et le boîtier d'électronique 12 est réalisé par l'intermédiaire de câbles souples qui s'étendent dans une glissière de guidage 13 dans laquelle lesdits câbles se déroulent ou se replie sur eux-mêmes au fur et à mesure de l'avancement ou du recul du chariot 3 sur les rails 2.

L'unité de gestion 11 assure le synchronisme des séquences de mouvements et de mesures.

Dans le cas où l'on teste des télécommandes ou badges à émission RF, le support 10 est avantageusement constitué par une cage 18 parallélépipèdique ouverte vers le véhicule, dont les parois sont recouvertes de tuiles en ferrite du côté intérieur et présentent un blindage métallique du côté externe.

Cette cage 18 en ferrite permet de minimiser les réflexions de l'environnement dans lequel est monté le banc de test, notamment des réflexions des murs lorsque ledit banc de test est monté dans un bâtiment.

Elle est d'une dimension suffisante pour que l'on puisse considérer que les réflexions renvoyées par le blindage métallique et non absorbées sont des réflexions de type champ lointain.

Les tuiles en ferrite sont destinées à absorber les ondes radiofréquence.

Le blindage métallique réfléchit ces ondes radiofréquences de façon à ce que celles-ci traversent deux fois les ferrites.

Les dimensions des ferrites sont choisies pour que leurs fréquences de résonance correspondent aux fréquences d'émission (45 à 65 dB d'atténuation pour des fréquences de 315, 433 et 868.30 MHz habituellement allouées aux télécommandes radiofréquence de véhicule automobile)

Bien entendu, dans le cas d'une télécommande infrarouge, la cage 18 en ferrite est inutile et le support 10 est alors uniquement constitué par un seul plateau.

Avantageusement, la cage 18 est démontable de façon à pouvoir être transformée en plateau, ce qui permet d'utiliser le même matériel aussi bien pour les essais sur les télécommandes RF que pour les essais pour les télécommandes IR.

Egalement, que la télécommande soit de type IR ou RF, le support 10 porte avantageusement un réceptacle dans lequel est reçue une empreinte de la télécommande, ladite empreinte permettant de maintenir ladite télécommande lors de son actionnement par le doigt pneumatique.

Un enrouleur E est prévu à l'extrémité de l'ensemble formant rails de guidage opposée au véhicule V. Cet enrouleur E reçoit les câbles d'alimentation et les crémaillères.

Le banc de test qui vient d'être décrit s'utilise de la façon suivante.

Après avoir fait monter le véhicule sur le plateau tournant 1, la télécommande est positionnée sur le support 10 et la hauteur de celui-ci est réglée par rapport au mât 9.

L'orientation de la télécommande sur le support est également réglée.

L'unité de gestion déplace alors le chariot 3 le long des rails, par exemple par pas de 1cm du véhicule jusqu'à l'extrémité des rails la plus éloignée par rapport à celui-ci.

Pour chaque nouvelle position de la télécommande sur les rails 2, le plateau 1 est tourné pas à pas sur lui-même.

Et pour chaque nouvelle orientation du véhicule par rapport à la télécommande, le vérin pneumatique est actionné pour déclencher la télécommande, par exemple trois fois de suite pour chaque position et orientations relatives de la télécommande par rapport au véhicule.

Pour chacune de ces positions et orientations relatives, l'unité de gestion, à laquelle est relié le récepteur au niveau du véhicule, enregistre le nombre de réceptions effectives en fonction du nombre d'émissions.

L'ensemble des résultats obtenus pour les différentes positions relatives possibles entre le véhicule et l'émetteur et/ou récepteur permet de dresser un diagramme de portée pour la télécommande testée définissant ainsi la performance du système récepteur / émetteur sur véhicule.

Ce diagramme peut être réalisé en coordonnées cartésiennes ; il peut également être représenté en coordonnées polaires.

En variante, le récepteur au niveau du véhicule peut n'être constitué que par une antenne de réception, celle-ci étant reliée à un analyseur de spectre lui-même relié à l'unité de gestion 11.

L'ensemble qui vient d'être décrit peut aussi bien être utilisé pour caractériser la performance d'un système comportant un émetteur et un récepteur que pour réaliser la caractérisation d'émetteurs ou de récepteurs seuls.

Pour la caractérisation d'un émetteur, une antenne est placée dans l'habitacle du véhicule pour simuler le récepteur. L'émetteur est positionné en lieu et place de la télécommande (badge) sur le chariot 3 et le signal reçu est analysé dans l'unité de gestion 11 que constitue la baie informatique.

Pour la caractérisation d'un récepteur situé dans le véhicule, une antenne émettrice est mise en lieu et place de la télécommande (badge) sur le chariot 3.

Une autre application est encore envisageable : il s'agit de définir l'environnement RF d'un véhicule. En effet, celui-ci dépend de la forme des matériaux employés et de nombreuses autres caractéristiques du véhicule. Les différents émetteurs et récepteurs sont alors simulés par des antennes que l'on dispose sur le support 10. Les résultats des transmissions émetteur / récepteur sont analysés par l'unité de gestion informatique 11. Cette caractéristique de l'environnement permet d'optimiser dans une phase Recherches et Développements (très en amont de la définition du produit), la future position d'un récepteur dans un véhicule donné.

L'unité de gestion 11 fournit les résultats sous la forme de fichiers informatiques à des formats standards.

Elle peut également fournir des résultats en temps réels, de façon par exemple à permettre à l'opérateur de détecter un éventuel problème sur le banc de test ou encore sur la synchronisation entre la télécommande et le récepteur sans qu'il ne soit nécessaire d'attendre la fin du test complet.

Lors de l'analyse en temps réel, une antenne A de surveillance du site est installée dans la zone de test et permet d'identifier d'éventuels brouilleurs RF. Cette antenne de surveillance est pilotée par l'unité de gestion 11.

On notera que l'ensemble de tests qui vient d'être décrit est modulaire : l'ensemble de guidage 2 est composé de rails élémentaires et on peut l'allonger ou le raccourcir à volonté ; le plateau 1 et le chariot 3 sont indépendants par rapport à l'ensemble de guidage 2.

L'ensemble de test qui est proposé peut donc facilement être monté, démonté et transporté par deux personnes, voir une seule, la manutention du plateau 1 pouvant par exemple être réalisée au moyen d'un système de levage embarqué dans le camion utilisé pour le déplacement du matériel.

D'autres variantes de réalisation de l'invention sont bien entendu envisageables.

Notamment, il pourrait être envisagé de disposer le plateau tournant et sa motorisation dans un logement ménagé à cet effet dans le sol, de telle façon que le plan supérieur dudit plateau se trouve au niveau du reste du sol.

Egalement, il pourrait être envisagé de disposer le plateau tournant et les rails dans un bâtiment à parois semi-anechoïques, de façon à isoler le banc de test par rapport aux perturbations électromagnétiques externes.

## Revendications

1. Ensemble pour caractériser la performance d'au moins un émetteur et/ou récepteur d'un système de commande à distance pour véhicule automobile, caractérisé en ce qu'il comporte un plateau tournant (1) apte à supporter un véhicule (V), des moyens de motorisation pour entraîner ledit plateau (1) en rotation, un ensemble (2) formant rails de guidage destiné à s'étendre jusqu'à proximité dudit plateau (1), un chariot (3) monté coulissant sur ledit ensemble (2) formant rails de guidage, des moyens de motorisation pour entraîner ledit chariot (3) en déplacement le long dudit ensemble formant rails de guidage, un support (10) porté par ledit chariot (3) destiné à recevoir ledit émetteur et/ou récepteur, des moyens de gestion (11) qui synchronisent les mouvements du plateau rotatif et du chariot (3) avec les émissions et/ou réception dudit émetteur et/ou récepteur.

2. Ensemble selon la revendication 1, caractérisé en ce qu'il comporte des moyens pour actionner de façon automatique un émetteur sur ledit support.

3. Ensemble selon la revendication 2, caractérisé en ce que les moyens pour le déclenchement de l'émetteur sont de type pneumatique.

4. Ensemble selon l'une des revendications précédentes, caractérisé en ce qu'il comporte des moyens permettant de modifier l'orientation de l'émetteur et/ou récepteur par rapport au support porté par le chariot (3).

5. Ensemble selon l'une des revendications précédentes, caractérisé en ce que le support (10) est porté par un mât (9) sur le chariot (3) et en ce que la hauteur dudit support (10) sur ledit mât (9) est réglable.

6. Ensemble selon l'une des revendications précédentes, caractérisé en ce que l'ensemble (2) formant rails de guidage, le chariot (3), le support (10) et les moyens de déclenchement de l'émetteur sont en des matériaux amagnétiques.

7. Ensemble selon l'une des revendications précédentes, caractérisé en ce que pour caractériser et évaluer la performance d'au moins un émetteur et/ou récepteur RF, le support comporte une cage (18) à tuiles en ferrite.

8. Ensemble selon l'une des revendications précédentes, caractérisé en ce que le plateau tournant (1) est au niveau du sol ou légèrement surélevé par rapport à celui-ci.

9. Ensemble selon l'une des revendications précédentes, caractérisé en ce qu'il comporte des moyens de type contacteur tournant qui permettent de suivre avec précision la rotation du plateau tournant (1).

10. Ensemble selon l'une des revendications précédentes, caractérisé en ce que le plateau tournant (1) est porté par plusieurs rangées de roulements à billes.

11. Ensemble selon l'une des revendications précédentes, caractérisé en ce que le chariot (3) est entraîné par un pignon (14) qui engrène avec une crémaillère (8) qui s'étend au milieu de l'ensemble formant rails de guidage (2).

12. Ensemble selon l'une des revendications précédentes, caractérisé en ce que le support (10) de l'émetteur et/ou récepteur est monté sur un plateau (6) qui est apte à coulisser par rapport au châssis du chariot, de sorte que ledit support (10) peut être avancé vers le véhicule lorsque le chariot est en bout de course sur l'ensemble formant rails de guidage (2).

13. Ensemble selon l'une des revendications précédentes, caractérisé en ce qu'il est modulaire.

14. Ensemble selon l'une des revendications précédentes, caractérisé en ce qu'il comporte des moyens de surveillance pour caractériser la position la position électro-magnétique.
